# EUROPÄISCHE PATENTANMELDUNG

(11) **EP 3 584 606 A1**
(43) Veröffentlichungstag der Anmeldung: **25.12.2019**
(21) Anmeldenummer: 18178506.4
(22) Anmeldetag: 19.06.2018
(51) Int. Cl.: G01S 19/09

(54) **VERFAHREN ZUR BEREITSTELLUNG VON GENAUEN POSITIONEN EINES ODER MEHRERER GNSS-EMPFÄNGER**

(71) Anmelder: Umdasch Group NewCon GmbH, 3300 Amstetten (AT); LineMetrics GmbH, 3350 Haag (AT)
(72) Erfinder: LUBOWSKI, Wolfgang, 3350 Haag (AT); NOWAK, Reinhard, 3350 Haag (AT); KLABACHER, Fabian, 4432 Ernsthofen (AT); BRANDL, Martin, 3300 Amstetten (AT)
(74) Vertreter: Sonn & Partner Patentanwälte

(57) **Zusammenfassung**

Verfahren zur Bereitstellung von genauen Positionen (14) eines oder mehrerer GNSS-Empfänger (R1, R2), das Verfahren umfassend:
Empfangen von GNSS-Signalen mit zumindest einem GNSS-Empfänger (R1, R2);
Ermitteln von satellitenspezifischen Rohdaten (6) mit dem zumindest einen GNSS-Empfänger (R1, R2) aus den jeweils empfangenen GNSS-Signalen;
Übertragen der von dem zumindest einen GNSS-Empfänger (R1, R2) ermittelten satellitenspezifischen Rohdaten (6) an eine Basisstation (B);
Berechnen einer Position des zumindest einen GNSS-Empfängers (R1, R2) mit der Basisstation (B) auf Basis der vom betreffenden GNSS-Empfänger (R1; R2) übertragenen satellitenspezifischen Rohdaten (6) und satellitenspezifischen Korrekturdaten;
Bereitstellen der berechneten Position/-en (14) des zumindest einen GNSS-Empfängers (R1, R2).

## Beschreibung

Die Erfindung betrifft ein Verfahren zur Bereitstellung von genauen Positionen eines oder mehrerer GNSS-Empfänger, einen mobilen GNSS-Empfänger zur genauen Positionsverfolgung eines damit verbundenen Objekts sowie ein System zur Bereitstellung von genauen Positionen eines oder mehrerer GNSS-Empfänger.

Die wichtigsten GNSSs (Global Navigation Satellite Systems), die momentan zur Verfügung stehen sind GPS, GLONASS, Galileo, Bei-Dou, IRNSS und QZSS. Die Tatsache, dass einige dieser Systeme momentan noch nicht vollständig ausgebaut sind und als solche alleine noch nicht betrieben werden können (beispielsweise Galileo), hindert deren Verwendbarkeit für die gegenständliche Erfindung nicht. Der GNSS-Empfänger kann mehrere der vorhandenen GNSSs gleichzeitig unterstützen (z.B. GPS, GLONASS und Galileo), d.h. Signale von deren Satelliten empfangen und auswerten. Als GNSS-Empfänger oder nur Empfänger wird hier ein vollständiges, betriebsfähiges Gerät bezeichnet (d.h. ein "Empfänger" im weiteren Sinn), während ein "Empfänger" im engeren Sinn als Empfangseinheit bezeichnet wird. Die Empfangseinheit ist jener Teil des Empfängers, der den Empfang und die Signalverarbeitung von GNSS-Signalen übernimmt. Der Empfänger umfasst neben der Empfangseinheit im Allgemeinen weitere Hardware, z.B. Mikrocontroller, die die über den reinen Empfang hinaus gehenden Funktionen des Empfängers übernimmt, z.B. eine Einbindung in ein Netzwerk oder System.

GNSS Signale werden in verschiedenen Frequenzbändern übertragen; die wichtigsten zivil nutzbaren Bänder sind L1 (GPS + Galileo: 1575.42 MHz, GLONASS: ca. 1602 MHz), L2 und L5 (beide etwa 1100-1300 MHz). Kostengünstige GNSS-Empfänger verwenden meistens nur das L1 Signal. Dual- oder Triple-Band Empfänger sind in der Regel wesentlich teurer. Allerdings sind diese Empfänger auch wesentlich genauer. Der Grund dafür ist, dass der größte Teil der Fehler bei der Positionsbestimmung (Einflüsse von Ionosphäre und Troposphäre, Signalpropagation durch Hindernisse, Fehler in der Signalverarbeitung im Empfänger, ...) frequenzabhängig ist. Der gleichzeitige Empfang mehrerer Signale auf verschiedenen Frequenzen ermöglicht es daher, diese Fehler sehr genau abzuschätzen und dadurch letztendlich kompensieren zu können.

Eine weitere bekannte Möglichkeit, die genannten Fehler (gegebenenfalls auch zusätzlich zur Verwendung eines Mehr-Band Empfängers) zu kompensieren und damit die Genauigkeit der Positionsbestimmung zu erhöhen, ist die Verwendung von RTK- (Real Time Kinematics) oder PPK- (Post Processing Kinematics) Verfahren. Dabei werden satellitenspezifische Korrekturdaten bereitgestellt, die einen Teil der Einflüsse kompensieren können. Diese können beispielsweise durch öffentliche Referenzstationen an exakt bekannten Positionen auf Basis der von diesen Stationen empfangenen Signale ermittelt und online zur Verfügung gestellt werden. Solche Korrekturdaten haben typischerweise im Umkreis von 10-20 km Gültigkeit. Es gibt auch RTK-Referenzsysteme (in Österreich beispielsweise APOS und EPOSA), deren Basisstationen auf einem wesentlich größeren Raster positioniert sind (Abstände im Bereich von 50-100 km) und die mittels Modellrechnung virtuelle Referenzstationen sehr nahe am gewünschten Einsatzort bereitstellen können.

In diesem Zusammenhang und auch im Weiteren sind mit satellitenspezifischen Korrekturdaten vorzugsweise solche, d.h. bei RTK- oder PPK-Verfahren verwendete Korrekturdaten, gemeint. Diese enthalten unter anderem Informationen über Ionosphäre und Troposphäre entlang der Sichtlinie zum Satelliten. Grundsätzlich werden beispielsweise auch bei PPP- (Precise Point Positioning) und SBAS- (Satellite-based Augmentation System) Verfahren satellitenspezifische Korrekturdaten verwendet, welche im gegenständlichen Verfahren eingesetzt werden können. Diese Korrekturdaten werden von weit verteilten Bodenstationen ermittelt, an Satelliten übertragen und von diesen wiederum an die Empfänger. Sie umfassen lediglich Informationen zu Bahn- und Uhrenabweichungen der Satelliten.

RTK und PPK verfolgen unterschiedliche Ziele und unterscheiden sich daher wesentlich im zeitlichen Ablauf. RTK-Verfahren sollen einem GNSS-Empfänger ermöglichen, die eigene Position möglichst genau zu ermitteln. Dazu erhält der Empfänger laufend aktualisierte Korrekturdaten, mit denen er aus den von ihm empfangenen GNSS-Signalen lokal und in Echtzeit seine eigene exakte Position berechnen kann. Dies ist beispielsweise bei allen Anwendungen relevant, bei denen eine lokale, insbesondere autonome, Steuerung einer Fortbewegung angestrebt wird (z.B. Navigationssysteme oder autonome Fahrzeuge). Dasselbe gilt für Network RTK Anwendungen: auch hier werden die von einer Zentrale ermittelten Korrekturdaten an die Rover verteilt, die jeweils ihre eigene genaue Position lokal berechnen.

In diesem Zusammenhang haben Magno et al (2018; DOI 10.1109) ein Verfahren gezeigt, bei dem Korrekturdaten von einer Basisstation mittels LoRa an einen Rover (d. h. eine mobile Station mit GNSS-Empfänger) übermittelt. Der Rover berechnet unter Verwendung der empfangenen Korrekturdaten und der empfangenen GNSS-Signale die eigene Position und sendet diese wieder mittels LoRa an ein Web Gateway.

Bei PPK-Verfahren ist im Unterschied dazu ein lokales Wissen über die eigene genaue Position nicht erforderlich. Es werden daher - mit vergleichsweise günstigeren elektronischen Bauteilen - zunächst die GNSS-Signale empfangen und lokal aufgezeichnet, d. h. in einem Massenspeicher hinterlegt. Demzufolge benötigt die mobile Empfangseinrichtung keine Korrekturdaten und führt auch lokal keine genaue Positionsbestimmung durch. Der Ort der Messung ist daher nicht in Echtzeit genau bekannt; dafür sind die Anforderungen an die lokale Rechenleistung des Empfängers deutlich geringer als bei RTK-Verfahren. Außerdem kann die Aufzeichnung offline erfolgen, ohne erforderliche Datenverbindung, was die Anforderungen an den Empfänger weiter reduziert. Die genaue Position des Empfängers oder ein exaktes Bewegungsprofil des Empfängers wird erst nachträglich, nach einer Übertragung der aufgezeichneten Daten, und auf Basis von parallel aufgezeichneten Korrekturdaten durchgeführt.

Eine beispielhafte Anwendung für ein solches PPK-Verfahren ist die Erstellung genauer topographischer Karten auf Basis von mit einer Drohne aufgenommenen Luftbildern (siehe King et al, "Validation of the QuestUAV PPK System", QuestUAV Ltd.). Die Drohne empfängt während des Fluges GNSS-Signale und zeichnet diese gleichzeitig mit den Luftbildern auf, sodass später für jedes aufgenommene Luftbild die genaue Position der Aufnahme rekonstruiert werden kann. Nach der Landung der Drohne werden die aufgenommenen Luftbilder zusammen mit den aufgezeichneten GNSS-Signalen auf einen PC übertragen. Am PC werden dann auf Grundlage des Beobachtungszeitraumes und der ungefähren Position der Luftaufnahmen geeignete Korrekturdaten, die von einer Referenzstation parallel aufgezeichnet wurden, heruntergeladen. Mit diesen Korrekturdaten und den aufgezeichneten GNSS-Signalen kann anschließend am PC für jedes aufgenommene Luftbild jeweils eine genaue Position berechnet werden.

Die bekannten Verfahren eignen sich nicht zur genauen Positionsverfolgung von Objekten. RTK-Verfahren haben den Nachteil, dass eine Empfangseinrichtung für jedes zu verfolgende Objekt sehr hohe Gesamtbetriebskosten (Total Cost of Ownership, TCO) hätte. Es müssen lokal aufwendige Berechnungen durchgeführt werden, was vergleichsweise teure Hardware voraussetzt; außerdem müssen ständig Korrekturdaten empfangen werden; beides verursacht einen hohen Stromverbrauch, was, - teure - Batterien mit hoher Kapazität voraussetzt. PPK-Verfahren haben den Nachteil, dass die genaue Position erst nachträglich bekannt ist, weshalb die Position der Objekte nicht laufend, insbesondere in Echtzeit oder nahe-Echtzeit, verfolgt werden kann.

Es ist eine Aufgabe der Erfindung, die Nachteile der bekannten Verfahren zu beseitigen oder zumindest zu verringern und eine genaue Positionsverfolgung von Objekten in Echtzeit oder nahe-Echtzeit mit einem geringeren TCO pro Objekt zu ermöglichen.

Die Erfindung sieht ein Verfahren zur Bereitstellung von genauen Positionen eines oder mehrerer GNSS-Empfänger vor, das Verfahren umfassend: Empfangen von GNSS-Signalen mit zumindest einem GNSS-Empfänger; Ermitteln von satellitenspezifischen Rohdaten mit dem zumindest einen GNSS-Empfänger aus den jeweils empfangenen GNSS-Signalen; Übertragen der von dem zumindest einen GNSS-Empfänger ermittelten satellitenspezifischen Rohdaten an eine Basisstation; Berechnen einer Position des zumindest einen GNSS-Empfängers mit der Basisstation auf Basis der vom betreffenden GNSS-Empfänger übertragenen satellitenspezifischen Rohdaten und satellitenspezifischen Korrekturdaten; und Bereitstellen der berechneten Position(en) des zumindest einen GNSS-Empfängers. Bereitstellen bedeutet in diesem Zusammenhang, dass eine Schnittstelle zum Zugriff auf die Positionsinformation vorgesehen ist. Beispielsweise können die Positionen von der Basisstation in eine zentrale Datenbank eingetragen oder allgemein an ein zentrales Service übermittelt werden; oder die Positionen können von der Basisstation abgefragt werden, insbesondere über ein Computer-Netzwerk. Die Basisstation verarbeitet demnach satellitenspezifische Rohdaten, die GNSS-Signalen entsprechen, die an einem anderen Ort als dem Standort der Basis empfangen wurden.

Außerdem sieht die Erfindung einen mobilen GNSS-Empfänger zur genauen Positionsverfolgung eines damit verbundenen Objekts vor, der mobile GNSS-Empfänger umfassend: eine Empfangseinheit zum Empfangen von GNSS-Signalen, einen Speicher, eine Verarbeitungseinheit, und eine Sendeeinheit zur drahtlosen Datenübertragung, wobei der Speicher mit dem Empfangsgerät verbunden und eingerichtet ist, empfangene GNSS-Signale zwischenzuspeichern, wobei die Verarbeitungseinheit mit dem Speicher und mit der Sendeeinheit verbunden und eingerichtet ist, aus den empfangenen GNSS-Signalen satellitenspezifischen Rohdaten zu ermitteln und die Sendeeinheit zur Übertragung der ermittelten satellitenspezifischen Rohdaten anzusteuern.

Schließlich ist die Erfindung auch ein System zur Bereitstellung von genauen Positionen eines oder mehrerer GNSS-Empfänger vor, das System umfassend: zumindest einen mobilen GNSS-Empfänger wie oben beschrieben und eine Basisstation, wobei die Basisstation eine Empfangseinheit zum Empfangen satellitenspezifischer Rohdaten von dem zumindest einen mobilen GNSS-Empfänger aufweist, wobei die Basisstation einen Speicher aufweist, der satellitenspezifische Korrekturdaten speichert, und wobei die Basisstation eine Verarbeitungseinheit aufweist, die eingerichtet ist, eine Position des zumindest einen GNSS-Empfängers auf Basis der vom betreffenden GNSS-Empfänger übertragenen satellitenspezifischen Rohdaten und der im Speicher gespeicherten satellitenspezifischen Korrekturdaten zu berechnen.

Der Erfindung liegt die Erkenntnis zugrunde, dass bei der Positionsverfolgung von Objekten - wie bei PPK-Verfahren - die Empfangseinrichtung selbst ihre eigene genaue Position nicht kennen muss. Andererseits ist - wie bei der RTK-Verfahren - eine aufrechte Datenverbindung erforderlich, um eine Verfolgung zu ermöglichen. Mit dem vorgeschlagenen PPK-ähnlichen Verfahren und einer Übertragung von satellitenspezifischen Rohdaten in Echtzeit oder nahe-Echtzeit kann der Stromverbrauch im Vergleich zu einem RTK-Empfänger deutlich gesenkt werden, weil der Empfänger keine Korrekturdaten empfangen und keine aufwendigen Berechnungen lokal durchführen muss. Satellitenspezifische Rohdaten umfassen allgemein von einzelnen GNSS-Satelliten empfangene Daten (z.B. Laufzeitinformationen) und/oder aus von einem GNSS-Satelliten empfangenen Daten abgeleitete Daten, die einem einzelnen GNSS-Satelliten eindeutig zugeordnet sind (z.B. mit einer Satelliten-Identifikation; daher "satellitenspezifisch"). Das Verfahren unterscheidet sich dennoch von einem herkömmlichen PPK-Verfahren, weil die GNSS-Signale nicht über einen längeren Zeitraum aufgezeichnet, sondern stattdessen im Wesentlichen unmittelbar und direkt vom im Allgemeinen wechselnden Ort der Messung an einen entfernten Ort, an dem sich die Basisstation befindet, übertragen werden. Es genügt daher, wenn der Empfänger mit einem simplen Mikrocontroller ausgestattet ist.

Ein bereits für sich genommen großer Vorteil der Erfindung ist die Verringerung der zu übertragenden Datenmenge. Die für eine einzelne erfindungsgemäße Positionsbestimmung zu übertragende Datenmenge (d.h. der satellitenspezifischen Rohdaten) ist vorzugsweise geringer als 1000 Byte, insbesondere geringer als 500 Byte. Im Vergleich dazu wäre die zu übertragende Datenmenge der erforderlichen Korrekturdaten und Ephemeriden bis zu drei Größenordnungen höher (bis zu etwa einem Faktor 1000). Eine so hohe Datenmenge schließt die Verwendung von schmalbandigen Funktechnologien aus, weil dabei nur eine sehr geringe Anzahl von Teilnehmern (mobilen GNSS-Empfängern) möglich wäre. D.h. die oben genannte Verringerung um einen Faktor 1000 ist zugleich als Erweiterung der Anzahl der möglichen Teilnehmer um denselben Faktor zu sehen und ist daher entscheidend für Anwendungen mit vielen günstigen GNSS-Empfängern, wie z.B. zur Positionsverfolgung in einem Lager.

Das vorliegende Verfahren umfasst insbesondere auch das Bereitstellen der satellitenspezifischen Korrekturdaten auf der Basisstation. Die Korrekturdaten können beispielsweise online verfügbare Korrekturdaten sein, die von der Basisstation auf Grundlage einer aus den erhaltenen satellitenspezifischen Rohdaten ermittelten ungefähren Position abgefragt und heruntergeladen werden. Bei der Berechnung wird die Position des zumindest einen GNSS-Empfängers durch Anwendung der erhaltenen oder ermittelten satellitenspezifischen Korrekturdaten auf die vom GNSS-Empfänger empfangenen satellitenspezifischen Rohdaten ermittelt. Dabei wird im Wesentlichen der auf Basis der satellitenspezifischen Rohdaten des GNSS-Empfängers und der Basisstation, etwaiger assoziierter Unsicherheiten und der satellitenspezifischen Rohdaten wahrscheinlichste Ortsvektor zwischen GNSS-Empfänger und Basisstation ermittelt und zum bekannten Ort der Basisstation addiert. Es findet im Prinzip keine Berücksichtigung, zu welchem GNSS-System ein Satellit gehört, sofern satellitenspezifischen Korrekturdaten für den betreffenden Satelliten verfügbar sind.

Die Empfangseinheit des mobilen GNSS-Empfängers kann vorzugsweise eine Single-Band L1 Empfangseinheit sein, die nur das L1 Signal empfängt. Derartige Empfangseinheiten sind technisch besonders einfach aufgebaut und entsprechend günstig in der Herstellung.

Vorzugsweise kann das Verfahren folgende zusätzliche Schritte zum Ermitteln der satellitenspezifischen Korrekturdaten umfassen: Bereitstellen einer Referenzposition eines GNSS-Referenzempfängers; Empfangen von GNSS-Signalen mit dem GNSS-Referenzempfänger; und Aufzeichnen der vom GNSS-Referenzempfänger empfangenen GNSS-Signale als satellitenspezifische Korrekturdaten. Genauer werden zumindest die in den GNSS-Signalen enthaltenen Laufzeitinformationen in digitalisierter Form aufgezeichnet (z.B. jeweils zumindest Pseudorange, Carrier Phase, Doppler Shift und Satelliten ID). Die Referenzposition des GNSS-Referenzempfängers kann beispielsweise durch eine einmalige Referenzortung mit einem hochgenauen Multiband-Empfänger bereitgestellt werden; alternativ ist auch eine einmalige Langzeit-Messung in Verbindung mit der Anwendung öffentlich verfügbarer Korrekturdaten und einer statistischen Auswertung möglich. Der GNSS-Referenzempfänger empfängt die GNSS-Signale im Wesentlichen zeitgleich mit den übrigen GNSS-Empfängern, sodass ein direkter Vergleich der empfangenen GNSS-Signale möglich ist. Die mobilen GNSS-Empfänger sind vorzugsweise in einem Umkreis von höchsten 30 km, insbesondere höchstens 20 km, vom GNSS-Referenzempfänger angeordnet.

Dementsprechend kann das erfindungsgemäße System zusätzlich einen GNSS-Referenzempfänger mit einer Empfangseinheit zum Empfangen von GNSS-Signalen umfassen, wobei die Basisstation mit dem GNSS-Referenzempfänger verbunden ist, wobei im Speicher der Basisstation eine Referenzposition des GNSS-Referenzempfängers gespeichert ist, und wobei die Verarbeitungseinheit der Basisstation eingerichtet ist, die vom GNSS-Referenzempfänger empfangenen GNSS-Signale als satellitenspezifische Korrekturdaten aufzuzeichnen. Der GNSS-Referenzempfänger kann ein mobiler GNSS-Empfänger sein, der allerdings stationär verwendet wird (nämlich an der bekannten Referenzposition).

Bevorzugt ist bei dem vorliegenden Verfahren bzw. dem vorliegenden System der GNSS-Referenzempfänger Teil der Basisstation. In diesem Fall befindet sich der GNSS-Referenzempfänger am selben Ort wie die Basisstation und ist beispielsweise mit der Basisstation integriert. Dies hat den Vorteil, dass die vom GNSS-Referenzempfänger empfangenen Daten nicht eigens übertragen werden müssen und somit möglichst viel der - in der Regel begrenzten - Bandbreite des verwendeten Übertragungsmediums für die übrigen GNSS-Empfänger frei bleibt. D.h. die Erfindung sieht vorzugsweise ein Verfahren zur Bereitstellung von genauen Positionen eines oder mehrerer GNSS-Empfänger vor, wobei das Verfahren umfasst: Bereitstellen einer Referenzposition einer Basisstation; Empfangen von GNSS-Signalen mit zumindest einem GNSS-Empfänger und mit der Basisstation (genauer: zeitgleiches Empfangen); Ermitteln von satellitenspezifischen Rohdaten mit dem zumindest einen GNSS-Empfänger aus den jeweils empfangenen GNSS-Signalen; Übertragen der von dem zumindest einen GNSS-Empfänger ermittelten satellitenspezifischen Rohdaten an die Basisstation; Berechnen einer Position des zumindest einen GNSS-Empfängers mit der Basisstation auf Basis der vom betreffenden GNSS-Empfänger übertragenen satellitenspezifischen Rohdaten, der von der Basisstation empfangenen GNSS-Signale und der Referenzposition der Basisstation; und Bereitstellen der berechneten Position(en) des zumindest einen GNSS-Empfängers.

Die satellitenspezifischen Rohdaten, welche vom GNSS-Empfänger übertragen werden, umfassen zumindest Pseudorange, Carrier Phase, Doppler Shift und Satelliten ID zumindest eines Teils der empfangenen GNSS-Signale, vorzugsweise jeweils mit zugeordneten Standardabweichungen. Die Standardabweichungen sind nicht zwingend erforderlich für die Positionsberechnung, ermöglichen aber eine höhere Genauigkeit. Die satellitenspezifischen Rohdaten umfassen die oben genannten Informationen nicht zwingend als separate Datenstrukturen, sondern vorzugsweise in komprimierter Form. Beispielsweise kann die Pseudorange als ein Korrekturterm zur Carrier Phase übertragen werden. Die Pseudorange kann aus der Carrier Phase mittels Multiplikation mit der Wellenlänge berechnet werden. Der verbleibende Fehlerterm ist in der weiteren Berechnung von gewisser Bedeutung und muss deshalb als Korrekturterm mitübertragen werden, um den wahren ursprünglichen Absolutwert der Pseudorange berechnen zu können.

Die satellitenspezifischen Rohdaten ermöglichen alleine noch keine absolute Positionsbestimmung. Dafür sind zusätzlich zumindest die Ephemeriden der jeweils zugeordneten (sendenden) Satelliten erforderlich. Der Empfang der Ephemeriden über das GNSS-Signal dauert sehr lange, z.B. mehr als 10 Minuten. Dementsprechend lange muss eine Empfangseinrichtung betrieben werden, um aktuelle Ephemeriden zu empfangen. Das gegenständliche Verfahren ermöglicht, dass die einzelnen GNSS-Empfänger ohne Kenntnis der Ephemeriden arbeiten. Diese werden vielmehr beispielsweise nur von der Basisstation empfangen und bei der vom GNSS-Empfänger entfernten Berechnung seiner Position berücksichtigt. Dadurch kann der Stromverbrauch des GNSS-Empfängers weiter reduziert werden.

Es ist besonders günstig, wenn die vom GNSS-Empfänger übertragenen Datenmenge möglichst gering ist. Eine Verringerung dieser Datenmenge reduziert den Stromverbrauch einer Übertragungsvorrichtung des mobilen GNSS-Empfängers und senkt somit bei vorgegebener Mindestlaufzeit die Anforderungen an eine Batterie. Darüber hinaus wird auch die benötigte Bandbreite eines verwendeten Übertragungsmediums reduziert, was bei gegebener Übertragungstechnologie eine größere Anzahl von Teilnehmern (GNSS-Empfängern) ermöglicht. Daher umfasst das Ermitteln der satellitenspezifischen Rohdaten vorzugsweise ein Komprimieren der empfangenen GNSS-Signale. D.h. die übermittelten satellitenspezifischen Rohdaten sind komprimiert.

In diesem Zusammenhang ist es besonders günstig, wenn beim Komprimieren nur jene Daten zur Übertragung weiterverarbeitet werden, die beim Berechnen der Position auf der Basisstation verwendet werden. Das sind insbesondere die oben genannten Mindestinformationen: Pseudorange, Carrier Phase, Doppler Shift und Satelliten ID.

Weiters ist es in diesem Zusammenhang vorteilhaft, wenn beim Komprimieren nur ein Teil der empfangenen GNSS-Signale weiterverarbeitet wird, wobei insbesondere GNSS-Signale mit einem höheren Signal-Rausch-Verhältnis und/oder GNSS-Signale mit geringeren Standardabweichungen und/oder GNSS-Signale von Satelliten, von denen in einem gesamten Beobachtungszeitraum eine größere Anzahl von GNSS-Signalen empfangen wurde und/oder GNSS-Signale von Satelliten mit einer geringeren Anzahl von Losses of Lock und/oder GNSS-Signale von Satelliten mit einer geringeren Anzahl nicht aufgelöster Half-Cycle-Ambiguities bevorzugt werden. Dementsprechend kann das Komprimieren die Anwendung eines Satelliten-Filters umfassen, wobei der Satelliten-Filter GNSS-Signale nach einem oder mehreren der oben genannten Kriterien verwirft. Der Satelliten-Filter verwirft GNSS-Signale mit einem im Vergleich zu den übrigen GNSS-Signalen hohen Signal-Rausch-Verhältnis und/oder hoher Standardabweichung (oder generell Unsicherheit). Alternativ oder zusätzlich verwirft der Satelliten-Filter GNSS-Signale von Satelliten, von denen in einem Beobachtungszeitraum einer einzelnen Positionsmessung vergleichsweise wenige GNSS-Signale empfangen wurden (d.h. es fehlen vergleichsweise viele erwartete GNSS-Signale des betreffenden Satelliten im Beobachtungszeitraum, z.B. weil eine Sichtlinie zum Satelliten vorübergehend unterbrochen war) und/oder bei denen im Beobachtungszeitraum vergleichsweise häufig ein Loss of Lock aufgetreten ist und/oder die im Beobachtungszeitraum vergleichsweise viele nicht aufgelöste Half-Cycle-Ambiguities hatten.

Die satellitenspezifischen Rohdaten werden vorteilhafter Weise drahtlos übertragen, insbesondere über ein Low Power Wide Area Network (LPWAN). Dementsprechend kann die Sendeeinheit des mobilen GNSS-Empfängers eine Funkeinheit sein, vorzugsweise eine LPWAN-Sendeeinheit, insbesondere eine LoRaWAN-Sendeeinheit. D.h. der zumindest eine GNSS-Empfänger und die Basisstation sind Teilnehmer an dem LPWAN. Vorzugsweise kann als LPWAN LoRaWAN verwendet werden. Der mit diesen Übertragungstechnologien erzielte geringe Stromverbrauch eignet sich besonders zur weiteren Verringerung der TCO der mobilen GNSS-Empfänger. Zugleich wird eine Reichweite erzielt, die gut mit der lokalen Gültigkeit der verwendeten Korrekturdaten übereinstimmt, sodass das Verfahren oder System nicht durch die Reichweite der Übertragungstechnik in seiner Anwendung beschränkt wird. Die beim LPWAN-Uplink (vom mobilen GNSS-Empfänger zur Basisstation) erzielbare Reichweite ist vorzugsweise größer als 10 km. In diesem Umkreis sind auch die satellitenspezifischen Korrekturdaten gültig, wenn der GNSS-Referenzempfänger und die Basisstation (mit der LPWAN-Empfangseinheit) im Wesentlichen am selben Ort angeordnet sind. Grundsätzlich können zur drahtlosen Übertragung aber auch andere Übertragungstechnologien verwendet werden, beispielsweise WiFi, GSM oder UMTS.

Darüber hinaus hat es sich als besonders günstig herausgestellt, wenn das Empfangen von GNSS-Signalen mit dem GNSS-Empfänger mit einer Wiederholungsfrequenz von höchstens 0,1 Hz, vorzugsweise höchstens 0,02 Hz, insbesondere höchstens 0,003 Hz erfolgt. Diese geringe Wiederholungsfrequenz ist ein weiterer Unterschied sowohl gegenüber bekannten RTK-Verfahren als auch PPK-Verfahren. Bei der Positionsverfolgung von Objekten ist oft nur eine Zuordnung zu jeweils über einen längeren Zeitraum unveränderlichen Aufbewahrungsorten oder Lagerpositionen von Interesse. Eine zeitlich besonders engmaschige Verfolgung (häufiger als alle 10 Minuten) ist demgegenüber meist nicht erforderlich. Unter diesen Umständen hat sich herausgestellt, dass die Genauigkeit der Positionsbestimmung vor allem von den am Beginn und Ende eines Beobachtungszeitraumes empfangenen GNSS-Signalen abhängt. Der Beobachtungszeitraum kann dabei beispielsweise einige Minuten betragen, vorzugsweise zwischen 4 und 30 Minuten, insbesondere zwischen 7 und 10 Minuten. Ein Weglassen der zwischen dem ersten und dem letzten GNSS-Signal empfangenen GNSS-Signale verringert die Genauigkeit der Positionsbestimmung vergleichsweise wenig.

Eine besonders hohe Energieeffizienz des mobilen GNSS-Empfängers kann daher erzielt werden, wenn nicht sämtliche GNSS-Signale in einem Beobachtungszeitraum verarbeitet werden (und optional nicht einmal empfangen werden). In der Folge werden aus den nicht verarbeiteten GNSS-Signalen naturgemäß auch keine satellitenspezifischen Rohdaten ermittelt und übertragen, was den Stromverbrauch weiter reduziert. Beispielsweise können weniger als 16 GNSS-Signale im Beobachtungszeitraum verarbeitet werden (d.h. die Empfangseinheit wird entweder nur fünfmal für weniger als eine Sekunde aktiviert oder es werden alle außerhalb dieser Zeitfenster empfangenen Signale unmittelbar verworfen und nicht gespeichert), vorzugsweise weniger als acht, insbesondere weniger als vier, besonders bevorzugt genau zwei. Dabei ist es besonders günstig, wenn die Zeitfenster, in denen GNSS-Signale empfangen werden, gegebenenfalls zwischen einem GNSS-Referenzempfänger und dem zumindest einen GNSS-Empfänger synchronisiert werden (z.B. mittels fest vorgegebener Phasenlage zur Uhrzeit), damit die satellitenspezifischen Korrekturdaten genau mit den satellitenspezifischen Rohdaten korrespondieren. Bei Verwendung einer - wesentlich teureren - Multi-Band GNSS-Empfangseinheit kann ein einzelner Empfangsvorgang auch auf eine einzige Beobachtung beschränkt werden, wenn damit eine ausreichende Positionsgenauigkeit erzielt wird.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 einen schematischen Überblick über ein System mit erfindungsgemäßen mobilen GNSS-Empfängern;
Fig. 2 schematisch die funktionellen Komponenten eines einzelnen mobilen GNSS-Empfängers und der Basisstation gemäß Fig. 1 sowie den Informationsfluss zwischen diesen Komponenten; und
Fig. 3 schematisch ein Sequenzdiagramm eines Ablaufs zur Ermittlung einer Position nach dem gegenständlichen Verfahren.

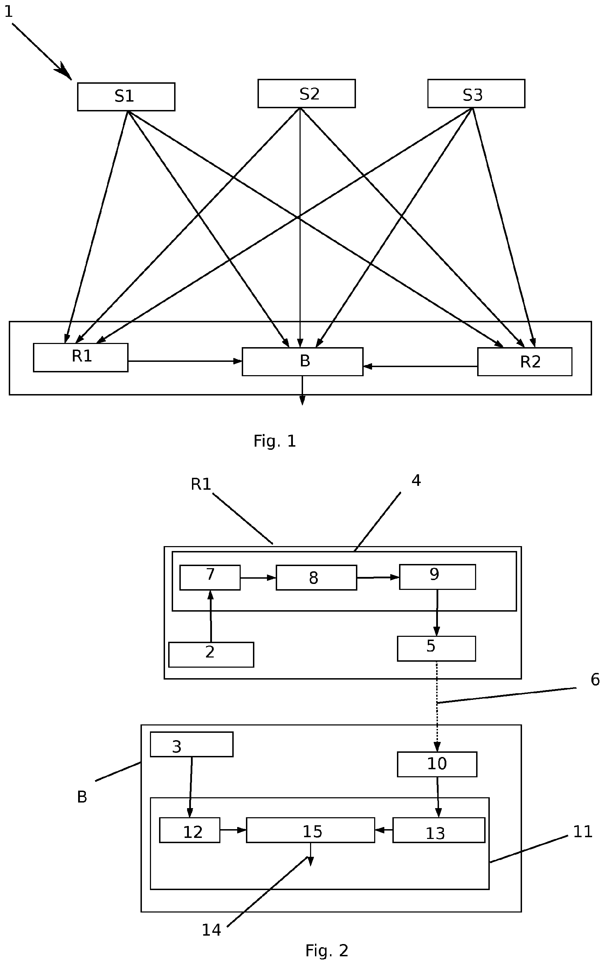

Fig. 1 zeigt ein System 1 zur Bereitstellung von genauen Positionen zweier mobiler GNSS-Empfänger R1, R2 zur genauen Positionsverfolgung von damit jeweils verbundenen Objekten. Das System 1 umfasst neben den beiden mobilen GNSS-Empfängern R1, R2 eine Basisstation B mit einem GNSS-Referenzempfänger. Die beiden mobilen GNSS-Empfänger R1, R2 und der GNSS-Referenzempfänger umfassen jeweils eine Empfangseinheit 2, 3 (vgl. Fig. 2) zum Empfangen von GNSS-Signalen, welche von GNSS-Satelliten S1, S2, S3 gesendet werden. Aus den Positionen der GNSS-Satelliten S1, S2, S3 und den Laufzeiten der GNSS-Signale können in an sich bekannter Weise die Positionen der GNSS-Empfänger R1, R2 und der Basisstation B berechnet werden.

Die mobilen GNSS-Empfänger können beispielsweise zur Positionsverfolgung von Gegenständen, Behältern oder Containern auf einer Lagerfläche im Freien verwendet werden, indem an jedem Gegenstand, Behälter oder Container ein GNSS-Empfänger R1, R2 befestigt wird und die GNSS-Empfänger R1, R2 drahtlos mit der Basisstation B kommunizieren (z.B. via LoRaWAN).

Fig. 2 zeigt den Informationsfluss zwischen einem der mobilen GNSS-Empfänger R1 und der Basisstation B mehr im Detail. Der mobile GNSS-Empfänger R1 umfasst neben der Empfangseinheit 2 zum Empfangen von GNSS-Signalen außerdem eine Verarbeitungseinheit 4, einen Speicher (hier als Teil der Empfangseinheit nicht eigens dargestellt) und eine LoRaWAN-Sendeeinheit 5 zur drahtlosen Datenübertragung. Die Empfangseinheit 2 ist vorzugsweise ein einfacher GNSS-Empfänger, z.B. u-Blox M8T. Als Antenne wurde eine Taoglas AGGP.25F Antenne getestet. Der Speicher ist mit der Empfangseinheit 2 verbunden und eingerichtet, empfangene GNSS-Signale zwischenzuspeichern. Die Verarbeitungseinheit 4 ist mit dem Speicher und mit der Sendeeinheit 5 verbunden und eingerichtet, aus den empfangenen GNSS-Signalen satellitenspezifischen Rohdaten 6 zu ermitteln und die Sendeeinheit 5 zur Übertragung der ermittelten satellitenspezifischen Rohdaten 6 anzusteuern. Die Sendeeinheit 5 ist im vorliegenden Ausführungsbeispiel eine LoRa-Einheit. Die Verarbeitungseinheit 4 ist ein simpler Mikrocontroller, z.B. Atmel SAMD21. In der Verarbeitungseinheit 4 sind verschiedene Verarbeitungs- oder Kompressionsstufen 7, 8, 9 implementiert. Die erste Stufe ist eine Abtastungsstufe 7, welche die empfangenen Signale auf bestimmte Zeitfenster reduziert. Die zweite Stufe ist ein Satellitenfilter 8, der die verbleibenden Signale nach verschiedenen, unten genauer erläuterten, Kriterien filtert. Die dritte Stufe in eine allgemeine Kompressionsstufe 9, die die gefilterten Daten komprimiert.

Die Basisstation B weist eine Empfangseinheit 10 zum Empfangen der satellitenspezifischen Rohdaten 6 von dem mobilen GNSS-Empfänger R1 auf. Die Basisstation B weist neben dem GNSS-Referenzempfänger weiters einen Speicher (nicht gezeigt) und eine Verarbeitungseinheit 11 auf. Der GNSS-Referenzempfänger kann z.B. ein u-Blox M8T Evaluationkit mit einer Novatel GNSS 501 Antenne sein. Im Speicher der Basisstation ist eine Referenzposition des GNSS-Referenzempfängers (d.h. damit auch der Basisstation B) gespeichert. Die Verarbeitungseinheit der Basisstation ist eingerichtet, die vom GNSS-Referenzempfänger empfangenen GNSS-Signale als satellitenspezifische Korrekturdaten aufzuzeichnen und im Speicher abzulegen. Die Abtastung und Aufzeichnung der Korrekturdaten erfolgt in einem Referenzmodul 12. In einem Dekompressionsmodul 13 der Verarbeitungseinheit 11 werden die empfangenen satellitenspezifischen Rohdaten 6 dekomprimiert, um die für die Berechnung erforderlichen Daten zu erhalten.

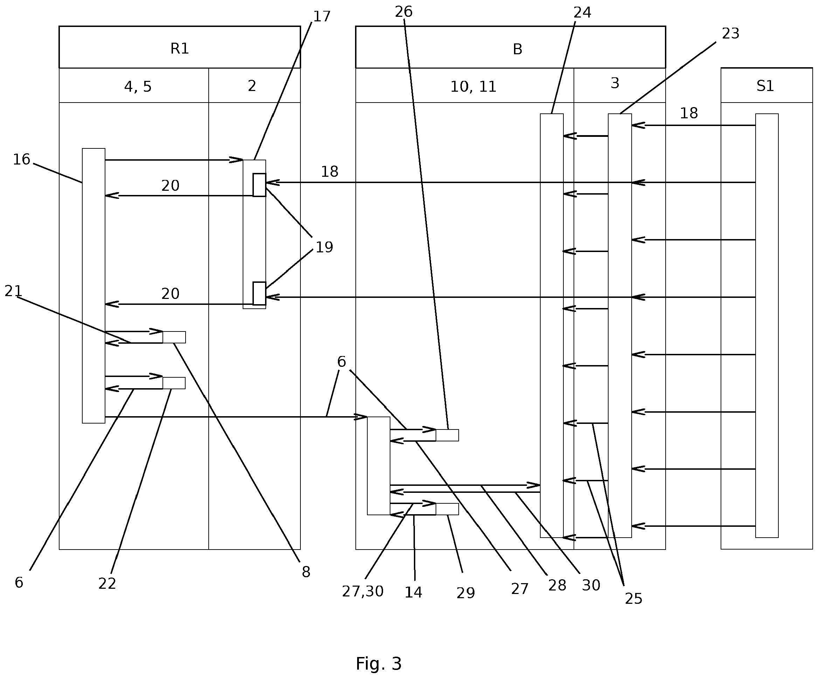

Der Speicher der Basisstation B speichert somit die satellitenspezifischen Korrekturdaten. Die Verarbeitungseinheit der Basisstation ist eingerichtet, die Positionen 14 der beiden GNSS-Empfänger R1, R2 auf Basis der von den GNSS-Empfängern R1, R2 jeweils übertragenen satellitenspezifischen Rohdaten und der im Speicher gespeicherten satellitenspezifischen Korrekturdaten zu berechnen und bereitzustellen. Diese Schritte erfolgen im Berechnungsmodul 15 der Verarbeitungseinheit 11 und werden unten im Zusammenhang mit Fig. 3 genauer beschrieben.

Im Folgenden wird ein vereinfachter Ablauf zur Bereitstellung einer genauen Position des GNSS-Empfängers R1 anhand von Fig. 3 im Einzelnen beschrieben: Eine Verarbeitungseinheit 4 löst infolge eines Auslösers (z.B. von einem Taktgenerator oder von einem Bewegungssensor) einen Positionsbestimmungsvorgang 16 aus. Im Zuge dieses Vorgangs 16 wird zunächst die Empfangseinheit 2 des GNSS-Empfängers R1 aktiviert und ein Empfangsvorgang 17 ausgelöst. Während des Empfangsvorgangs 17 empfängt die Empfangseinheit 2 GNSS-Signale 18 von mehreren Satelliten S1, S2, S3 (der Einfachheit halber ist in Fig. 3 nur ein Satellit S1 dargestellt), vorzugsweise mindestens fünf Satelliten, insbesondere mindestens zehn Satelliten. (Unter guten Bedingungen können derzeit Signale von über 30 Satelliten gleichzeitig empfangen werden.) Der Empfangsvorgang 17 setzt sich insbesondere aus zumindest zwei Zeitfenstern 19 zusammen, während denen GNSS-Signale 18 aktiv empfangen werden (verstärkt, gemessen, etc.) und verarbeitet werden, wobei jedes Zeitfenster mindestens 10 Sekunden lang ist, vorzugsweise mindestens 26 Sekunden lang. Zwischen den Zeitfenstern 19 werden etwaige empfangene GNSS-Signale für Pausen von bis zu 7 Minuten verworfen und nicht verarbeitet, um Strom zu sparen. Beispielsweise ist die Empfangseinheit 2 durchgehend aktiv (und empfängt Daten vom Satelliten S1), der für die Verarbeitung zuständige Mikrocontroller fragt allerdings nur wenige Male, über einige Minuten verteilt Daten ab und sammelt diese in einem Zwischenspeicher. Nach Abschluss des Empfangsvorgangs werden aus den gesammelten GNSS-Signalen 20 satellitenspezifische Rohdaten 6 ermittelt.

Dabei werden die empfangenen GNSS-Signale 20 in einem mehrstufigen Verfahren komprimiert, um die satellitenspezifischen Rohdaten 6 zu erhalten. In einer ersten Stufe dieser Komprimierungen wird zunächst ein Satellitenfilter 8 auf die empfangenen GNSS-Signale angewendet. Der Satellitenfilter 8 entfernt zunächst alle Signale, bei denen das Loss-of-Lock Flag gesetzt ist. Alternativ können auch nur Signale von Satelliten entfernt werden, bei denen das Loss-of-Lock Flag häufig gesetzt ist (z.B. bei zumindest der Hälfte aller empfangenen Signale). Anschließend werden vom Satellitenfilter 8 alle Signale von Satelliten S1-3 verworfen, deren Signal nur in einem Teil der Zeitfenster 19 empfangen wurde, d.h. deren Signale nicht über den gesamten Beobachtungszeitraum 17 des Empfangsvorganges in jedem Zeitfenster 19 empfangen wurden. Anschließend wird auf Basis der Signal-Rausch-Verhältnisse (Signal-Noise-Ratio, SNR) der empfangenen GNSS-Signale, z.B. durch Mittelwertbildung, ein satellitenspezifisches SNR ermittelt. Die Signale von den zehn Satelliten mit dem besten (größten) SNR werden als ausgewählte GNSS-Signale 21 beibehalten und weiterverarbeitet; die übrigen Signale werden verworfen. Von den ausgewählten GNSS-Signalen 21 werden in einem Kompressionsschritt 22 sämtliche Informationen entfernt, die beim Berechnen der Position auf der Basisstation B nicht verwendet werden; verwendet und daher nicht entfernt werden jeweils nur Pseudorange, Carrier Phase, Doppler Shift, jeweils mit zugeordneten Standardabweichungen, sowie die Satelliten ID. In den verbleibenden Daten werden anschließen Redundanzen auf Bedeutungs-Ebene bereinigt (z.B. Pseudorange nur als Korrekturterm zur Carrier Phase übertragen; und/oder höchstwertige Bytes oder Bits, die aufgrund der Bedeutung innerhalb des Beobachtungszeitraums gleich sein müssen, entfernen). Die gefilterten und bereinigten ausgewählten GNSS-Signale können anschließend noch mit einem allgemeinen Komprimierungsverfahren komprimiert werden, um die satellitenspezifischen Rohdaten 6 zu erhalten; beispielsweise werden aufgrund der notwendigen Genauigkeit und des möglichen Wertebereichs Gleitkommazahlen auf Fixkomma-Integer-Darstellung gebracht, z.B. 8 Byte Float auf 5 Byte Integer in Festkomma-Darstellung.

Die so erhaltenen satellitenspezifischen Rohdaten 6 überträgt der GNSS-Empfänger R1 anschließend an die Basisstation B. Auf physikalischer Ebene übernehmen die LPWAN-Sende- und Empfangseinheiten 5, 10 am GNSS-Empfänger R1 und auf der Basisstation B die Übertragung. Um eine von der Dauer des Beobachtungszeitraumes unabhängige, vorhersehbare Paketgröße zu erzielen, wird vorzugsweise pro Beobachtungszeitpunkt ein Paket der ausgewählten, gefilterten, bereinigten und komprimierten GNSS-Signale des betreffenden Beobachtungszeitpunkts übertragen. D.h. die GNSS-Signale werden nach dem jeweiligen Beobachtungszeitpunkt in Pakete eingeteilt. Je nach Dauer des Beobachtungszeitraumes werden somit typischerweise 2, 3 oder 4 Pakete in unmittelbarer Abfolge übertragen. Mit der Übertragung ist der Positionsbestimmungsvorgang 16 am GNSS-Empfänger R1 beendet.

Damit die Basisstation B aus den satellitenspezifischen Rohdaten 6 eine möglichst genaue Position berechnen kann, sind satellitenspezifische Korrekturdaten erforderlich, um wechselnde und unvorhersehbare Einflüsse auf die GNSS-Signale abschätzen und korrigieren zu können. Zum Ermitteln der satellitenspezifischen Korrekturdaten wird zunächst eine Referenzposition der Basisstation B (mit dem integrierten GNSS-Referenzempfänger) bereitgestellt, an der die satellitenspezifischen Korrekturdaten aufgezeichnet werden. Beispielsweise kann die Referenzposition der Basisstation B von einem Geometer einmalig vorab vermessen und an die Basisstation B übermittelt werden oder die Basisstation B vermisst die eigene Position über einen längeren Zeitraum (z.B. mehrere Tage), damit sich Fehler aus wechselnden Einflüssen auf die empfangenen GNSS-Signale im Mittel aufheben. Weitere Möglichkeiten, die Referenzposition der Basisstation B zu ermitteln, sind die Verwendung von RTK-Referenzdiensten, wie z.B. in Österreich APOS oder EPOSA, oder die Verwendung von PPP.

Während des gegenständlichen Verfahrens, d.h. zeitgleich mit dem Betrieb des mobilen GNSS-Empfängers R1, empfängt die Basisstation B mit dem GNSS-Referenzempfänger, genauer dessen Empfangseinheit 3, im Rahmen eines Empfangsvorganges 23 GNSS-Signale 18. Die Wiederholungsfrequenz kann hier deutlich höher sein als bei den mobilen GNSS-Empfängern R1, R2, z.B. etwa 1 Hz, damit für jedes von einem mobilen GNSS-Empfänger R1, R2 empfangene GNSS-Signal 18 zeitlich möglichst synchrone und aktuelle satellitenspezifische Korrekturdaten vorliegen. Die mobilen GNSS-Empfänger R1, R2 befinden sich z.B. bei der Anwendung in einem Lager in einem Umkreis von höchstens 20 km von der Basisstation B. Die vom GNSS-Referenzempfänger empfangenen GNSS-Signale 18 sind daher zum Teil denselben Einflüssen ausgesetzt, wie die vom mobilen GNSS-Empfänger R1 empfangenen GNSS-Signale 18. Insbesondere Fehler der Satellitenzeit, der Satellitenposition und atmosphärische Einflüsse auf die Laufzeit betreffen die GNSS-Signale 18 sowohl am GNSS-Referenzempfänger als auch am mobilen GNSS-Empfänger R1 und können daher korrigiert werden. Zu diesem Zweck zeichnet die Basisstation B die vom GNSS-Referenzempfänger empfangenen GNSS-Signale 18 im Rahmen eines Aufzeichnungsvorganges 24 als satellitenspezifische Korrekturdaten 25 für den Empfangszeitpunkt und für die Referenzposition auf. Als Teil der satellitenspezifischen Korrekturdaten 25 werden dabei zumindest die Laufzeitinformationen der einzelnen GNSS-Signale 18 aufgezeichnet, z.B. jeweils Pseudorange, Carrier Phase, Doppler Shift und Satelliten ID. Dabei berücksichtigt die Basisstation B möglichst alle empfangenen GNSS-Signale 18, damit für die von den GNSS-Empfängern R1, R2 empfangenen Signale mit dem besten SNR geeignete Korrekturdaten verfügbar sind. Außerdem empfängt die Basisstation B über den GNSS-Referenzempfänger auch die Ephemeriden der Satelliten S1, S2, S3.

Die Basisstation B bestimmt auf Basis der vom GNSS-Empfänger R1 übertragenen satellitenspezifischen Rohdaten 6, die zunächst in einem Dekompressionsvorgang 26 dekomprimiert werden, der gespeicherten Ephemeriden und der gespeicherten satellitenspezifischen Korrekturdaten 25 eine genaue Position des GNSS-Empfängers R1. Anhand der Signalinformationen in den dekomprimierten satellitenspezifischen Rohdaten 27 wird eine Abfrage 28 der korrespondierenden satellitenspezifischen Korrekturdaten 25 durchgeführt. Die Positionsberechnung 29 selbst ist an sich bekannt und wird beispielsweise von der frei zugänglichen Programmbibliothek RTKLib implementiert (siehe T. Takasu, RTKLIB ver. 2.4.2 Manual. Tokyo, Japan, 2013). Im Wesentlichen bestimmt die Basisstation B auf Basis der dekomprimierten satellitenspezifischen Rohdaten 27 und den abgefragten satellitenspezifischen Korrekturdaten 30 ausgehenden von den Laufzeitdifferenzen zwischen GNSS-Empfänger R1 und GNSS-Referenzempfänger (s.g. Single-Differences) mit Hilfe eines linearisierten Modells der Messung iterativ durch ein Verfahren kleinster Fehlerquadrate einen Differenzvektor zwischen GNSS-Empfänger R1 und GNSS-Referenzempfänger, addiert diesen Differenzvektor zur bekannten Referenzposition des GNSS-Referenzempfängers und berechnet so eine korrigierte, genaue Position 14 des GNSS-Empfängers R1. Da die GNSS-Signale 18, die vom GNSS-Referenzempfänger empfangen werden, näherungsweise den gleichen Störungen unterworfen sind, wie jene, die der GNSS-Empfänger R1 empfängt, fallen die oben erwähnten Fehlerquellen weg. Im Laufe der Positionsberechnung 29 werden aus den Single-Differences so genannte Double-Differences gebildet, wodurch weitere Fehlerquellen (insbesondere lokale Fehler der Empfänger) ausgeschlossen werden können und die Positionsgenauigkeit weiter erhöht wird. Schließlich stellt die Basisstation B die berechnete genaue Position 14 des GNSS-Empfängers R1 bereit, indem sie die genaue Position 14 an ein Web-Service meldet (nicht gezeigt).

## Patentansprüche

1. Verfahren zur Bereitstellung von genauen Positionen (14) eines oder mehrerer GNSS-Empfänger (R1, R2), das Verfahren umfassend:
Empfangen von GNSS-Signalen mit zumindest einem GNSS-Empfänger (R1, R2);
Ermitteln von satellitenspezifischen Rohdaten (6) mit dem zumindest einen GNSS-Empfänger (R1, R2) aus den jeweils empfangenen GNSS-Signalen;
Übertragen der von dem zumindest einen GNSS-Empfänger (R1, R2) ermittelten satellitenspezifischen Rohdaten (6) an eine Basisstation (B);
Berechnen einer Position des zumindest einen GNSS-Empfängers (R1, R2) mit der Basisstation (B) auf Basis der vom betreffenden GNSS-Empfänger (R1; R2) übertragenen satellitenspezifischen Rohdaten (6) und satellitenspezifischen Korrekturdaten;
Bereitstellen der berechneten Position/-en (14) des zumindest einen GNSS-Empfängers (R1, R2).

2. Verfahren nach Anspruch 1, **dadurch gekennzeichnet, dass** das Verfahren folgende zusätzliche Schritte zum Ermitteln der satellitenspezifischen Korrekturdaten umfasst:
Bereitstellen einer Referenzposition eines GNSS-Referenzempfängers;
Empfangen von GNSS-Signalen mit dem GNSS-Referenzempfänger; und
Aufzeichnen der vom GNSS-Referenzempfänger empfangenen GNSS-Signale als satellitenspezifische Korrekturdaten.

3. Verfahren nach Anspruch 2, **dadurch gekennzeichnet, dass** der GNSS-Referenzempfänger Teil der Basisstation (B) ist.

4. Verfahren gemäß einem der vorstehenden Ansprüche, **dadurch gekennzeichnet, dass** die satellitenspezifischen Rohdaten (6) zumindest Pseudorange, Carrier Phase, Doppler Shift und Satelliten ID zumindest eines Teils der empfangenen GNSS-Signale umfassen, vorzugsweise jeweils mit zugeordneten Standardabweichungen.

5. Verfahren gemäß einem der vorstehenden Ansprüche, **dadurch gekennzeichnet, dass** das Ermitteln der satellitenspezifischen Rohdaten (6) ein Komprimieren der empfangenen GNSS-Signale umfasst.

6. Verfahren gemäß Anspruch 5, **dadurch gekennzeichnet, dass** beim Komprimieren nur jene Daten zur Übertragung weiterverarbeitet werden, die beim Berechnen der Position auf der Basisstation (6) verwendet werden.

7. Verfahren gemäß Anspruch 5 oder 6, **dadurch gekennzeichnet, dass** beim Komprimieren nur ein Teil der empfangenen GNSS-Signale weiterverarbeitet werden, wobei insbesondere GNSS-Signale mit einem höheren Signal-Rausch-Verhältnis und/oder GNSS-Signale mit geringeren Standardabweichungen und/oder GNSS-Signale von Satelliten (S1, S2, S3), von denen in einem gesamten Beobachtungszeitraum eine größere Anzahl von GNSS-Signalen empfangen wurde und/oder GNSS-Signale von Satelliten (S1, S2, S3) mit einer geringeren Anzahl von Losses of Lock und/oder GNSS-Signale von Satelliten (S1, S2, S3) mit einer geringeren Anzahl nicht aufgelöster Half-Cycle-Ambiguities bevorzugt werden.

8. Verfahren gemäß einem der vorstehenden Ansprüche, **dadurch gekennzeichnet, dass** die satellitenspezifischen Rohdaten drahtlos übertragen werden, wobei zum Übertragen der satellitenspezifischen Rohdaten insbesondere ein Low Power Wide Area Network (LPWAN) verwendet wird.

9. Verfahren gemäß einem der vorstehenden Ansprüche, **dadurch gekennzeichnet, dass** das Empfangen von GNSS-Signalen mit dem GNSS-Empfänger (R1, R2) mit einer Wiederholungsfrequenz von höchstens 0,1 Hz, vorzugsweise höchstens 0,02 Hz, insbesondere höchstens 0,003 Hz erfolgt.

10. Mobiler GNSS-Empfänger (R1) zur genauen Positionsverfolgung eines damit verbundenen Objekts, umfassend:
eine Empfangseinheit (2) zum Empfangen von GNSS-Signalen,
einen Speicher,
eine Verarbeitungseinheit (4), und
eine Sendeeinheit (5) zur drahtlosen Datenübertragung,
wobei der Speicher mit der Empfangseinheit (2) verbunden und eingerichtet ist, empfangene GNSS-Signale zwischenzuspeichern,
wobei die Verarbeitungseinheit (4) mit dem Speicher und mit der Sendeeinheit (5) verbunden und eingerichtet ist, aus den empfangenen GNSS-Signalen satellitenspezifischen Rohdaten (6) zu ermitteln und die Sendeeinheit zur Übertragung der ermittelten satellitenspezifischen Rohdaten (6) anzusteuern.

11. Mobiler GNSS-Empfänger (R1) gemäß Anspruch 10, **dadurch gekennzeichnet, dass** die Sendeeinheit (5) eine Funkeinheit ist, vorzugsweise eine LPWAN-Sendeeinheit, insbesondere eine LoRaWAN-Sendeeinheit.

12. System (1) zur Bereitstellung von genauen Positionen eines oder mehrerer GNSS-Empfänger (R1, R2), das System umfassend:
zumindest einen mobilen GNSS-Empfänger (R1, R2) gemäß Anspruch 10 oder 11 und
eine Basisstation (B),
wobei die Basisstation (B) eine Empfangseinheit (10) zum Empfangen satellitenspezifischer Rohdaten von dem zumindest einen mobilen GNSS-Empfänger (R1, R2) aufweist,
wobei die Basisstation (B) einen Speicher aufweist, der satellitenspezifische Korrekturdaten speichert, und
wobei die Basisstation (B) eine Verarbeitungseinheit (11) aufweist, die eingerichtet ist, eine Position des zumindest einen GNSS-Empfängers (R1, R2) auf Basis der vom betreffenden GNSS-Empfänger (R1, R2) übertragenen satellitenspezifischen Rohdaten (6) und der im Speicher gespeicherten satellitenspezifischen Korrekturdaten zu berechnen.

13. System (1) gemäß Anspruch 12, **gekennzeichnet durch**:
einen GNSS-Referenzempfänger mit einer Empfangseinheit (3) zum Empfangen von GNSS-Signalen,
wobei die Basisstation (B) mit dem GNSS-Referenzempfänger verbunden ist,
wobei im Speicher der Basisstation (B) eine Referenzposition des GNSS-Referenzempfängers gespeichert ist, und
wobei die Verarbeitungseinheit (11) der Basisstation (B) eingerichtet ist, die vom GNSS-Referenzempfänger empfangenen GNSS-Signale als satellitenspezifische Korrekturdaten aufzuzeichnen.

14. System (1) gemäß Anspruch 13, **dadurch gekennzeichnet, dass** der GNSS-Referenzempfänger Teil der Basisstation (B) ist.
